# EUROPEAN PATENT APPLICATION

(11) **EP 4 166 974 A1**
(43) Date of publication of application: **19.04.2023**
(21) Application number: 21398019.6
(22) Date of filing: 18.10.2021
(51) Int. Cl.: G01S 3/40, G01S 5/08, H04W 52/28, B63B 22/16, B63C 9/08

(54) **METHOD, DEVICE AND FLOATING ELEMENT FOR A COASTAL ZONE, SUCH AS A SIGNAL BUOY, FOR THE MANAGEMENT OF ENERGY CONSUMPTION IN COMMUNICATIONS**

(71) Applicant: Ferreira Noras, Jorge Alberto, 2560-346 Torres Vedras (PT)
(72) Inventor: Ferreira Noras, Jorge Alberto, 2560-346 Torres Vedras (PT)
(74) Representative: do Nascimento Gomes, Rui

(57) **Abstract**

The present disclosure falls within the scope of navigation systems for floating vessels, such as boats or ships, in coastal areas. A method for managing energy consumption in communications from a floating element (10) and which is suitable for a coastal area is an object of the present disclosure, comprising (i) in a floating element (10) and through wireless communication means (13), receiving a wireless acknowledgement signal (310), the wireless acknowledgement signal (310) comprising a digital identification of a floating vessel (100), (ii) based on the received wireless acknowledgement signal (310), determining a proximity value to the floating element (10), the proximity value being associated with the wireless acknowledgement signal (310), and (iii) based on the proximity value, adjusting the emission power of the wireless communication means (13).

## Description

### TECHNICAL FIELD

The present disclosure falls within the area of navigation systems for floating vessels, such as boats or ships, in coastal areas.

### BACKGROUND

Navigation in coastal areas has particularities that include, among others, the need to identify elements such as deeper waters, a route to be followed by a vessel when entering a port bar, harbour or dock, or the identification of isolated dangers.

To better govern the identification of these elements, there are systems such as the Maritime Buoyage System of the International Association of Marine Aids to Navigation and Lighthouse Authorities (IALA), which defines specific information on marker buoys.

This system includes marker buoys with different colours and markings, visible to the crew of a vessel. The marker buoys may also have lighting elements, for better visibility, for example, in night conditions.

Over time, efforts have been made to improve signalling with the help of several technologies, for example by means of the aforementioned lighting elements.

US patent application US 4,071,845 A is an example of an improved system for entry into a harbour of refuge, where marker buoys are able to communicate wirelessly, emitting a signal detectable by a vessel in a harbour entry route.

This type of system is intended to be highly robust - i.e. capable of maintaining its own operation - and durable, since typically marker buoys deployed in a coastal region are large in number and are arranged in areas of difficult access.

Also typically, marker buoys, containing elements such as light signalling and/or radio frequency communication capability, require power supply means, such as batteries.

Thus, the ability to maintain for as long as possible its power autonomy has emerged as a relevant element in robustness.

As a response, energy capture elements have been included in systems such as marker buoys which, associated with a battery and provided that a minimum daily solar exposure is guaranteed, virtually enable continuous operation without concerns as to battery discharge.

On the other hand, these solutions also have disadvantages in the same field, since they are dependent on a good performance of the energy-capture means. Typically, these capture means are solar panels, which must be clean to ensure a good energy conversion rate.

Furthermore, this type of system also requires a good balance between the energy captured and the energy consumed, which can be difficult to obtain when more energy-consuming components are associated with marker buoys (the same example as above), such as wireless communication or geolocation elements.

In the particular case of wireless communications, marker buoys typically perform their signalling action by emitting messages detectable by ships or boats passing in their vicinity, such as in the case of the patent application mentioned above.

This leads to a constant consumption that can be reduced with efficient energy management techniques, such as the implementation of transmission duty cycles, but still typically leads to a high overall consumption considering other elements such as light systems or geolocation.

The present disclosure thus emerges as an efficient and reduced complexity solution for power management in these environments, while maintaining all the capabilities and reliability of a signalling system suitable for floating elements such as marker buoys. Additionally, the solution of the present disclosure ensures efficient and adequate communication under conditions adverse to wireless signal transmission, including high distances between communication devices.

### SUMMARY OF THE DISCLOSURE

A method for managing energy consumption in communications from a floating element suitable for a coastal area is an object of the present disclosure.

In an embodiment of the method, the latter comprises the following steps:
in a floating element and through wireless communication means, receiving a wireless acknowledgement signal, the wireless acknowledgement signal comprising a digital identification of a floating vessel,
based on the received wireless acknowledgement signal, determining a proximity value to the floating element, the proximity value being associated with the wireless acknowledgement signal, and
based on the proximity value, adjusting the transmission power of the wireless communication means.

This makes it possible that by adjusting or adapting the remote transmission power to a transmitting element of the wireless acknowledgement signal, a communication device, such as a communication module, associated with the floating element (i) better manages the power consumption associated with typically energy-intensive wireless communications so that no higher or substantially higher power is used than necessary - to which higher energy consumption is associated - and (ii) in case of reception of a wireless acknowledgement signal for which a proximity value is determined to be low, the transmission power can be adjusted such that it ensures good reception of any wireless signal to be emitted from the floating element at a distance associated with the determined proximity value.

Also an object of the present disclosure is a wireless communication module for managing power consumption in communications from a floating element to a coastal area.

In an embodiment, the wireless communication module of the floating element comprises coupling means configured for coupling to a floating element, such as a marker buoy, as well as wireless communication means and a controller in connection with the wireless communication module.

In an embodiment, the wireless communication module is further configured to implement the method of the present disclosure, in any one of its respective embodiments.

A floating element adapted to float in a coastal area is also an object of the present disclosure.

In an embodiment, the floating element comprises a controller, wireless communication means and electrical power supply means, the electrical power supply means and the wireless communication module being connected such that the electrical power supply means feed the wireless communication means, and the floating element being configured to implement the method of the present disclosure, in any one of respective embodiments.

In an embodiment, the floating element comprises the wireless communication module of the present disclosure and electrical power supply means.

In an embodiment, the electrical power supply means and the wireless communication means are connected such that the electrical power supply means feed the wireless communication means.

In an embodiment, the floating element comprises a marker buoy.

In another embodiment, the floating element comprises a small boat.

### DESCRIPTION OF THE FIGURES

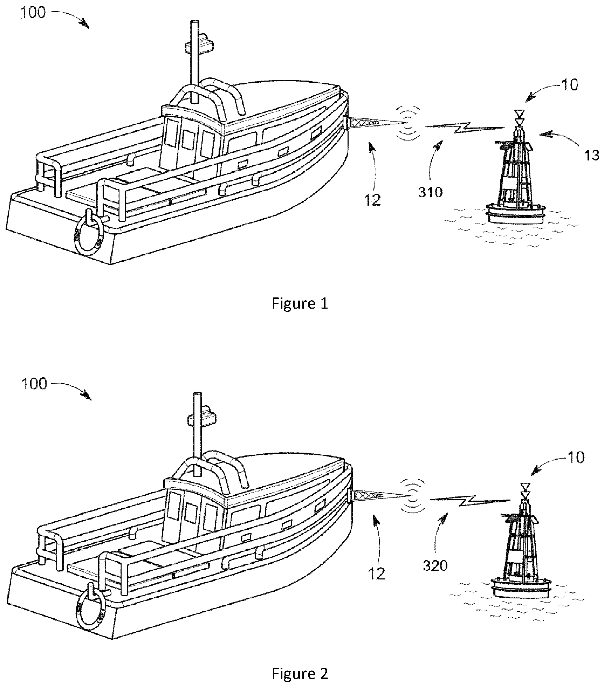

Figure 1 - Schematic representation of an embodiment of the method of the present disclosure, wherein a floating vessel (100) (which, in this example, consists of a boat) emits a wireless acknowledgement signal (310) via communication means of the floating vessel (12), the wireless acknowledgement signal (310) being received at a floating element (10) (which, in this example, consists of a marker buoy). The wireless acknowledgement signal (310) enables the floating element/marker buoy (10) to determine a proximity value between the floating element/marker buoy (10) and the floating vessel/boat (100). The proximity value may consist of a parameter of the wireless signal, such as signal strength, or a distance between the two. It is based on this proximity value that the emission power of the wireless communication means (13) of the floating element/marker buoy (10) is adjusted.
Figure 2 - schematic representation of an embodiment of the solution of the present disclosure, corresponding to a moment before or after the moment depicted on the embodiment of Figure 1. Thus, the floating element/marker buoy (10) has not yet received or has already received a wireless acknowledgement signal (310) via communication means (13), originating from the floating vessel/boat (100). In this embodiment, and via the wireless communication means (13), the floating element/marker buoy (10) emits a wireless identification signal (320), the wireless identification signal (320) comprising a digital identification of the floating element/marker buoy (10) and being received by the floating vessel/boat (100), on the corresponding communication means (12).

### DETAILED DESCRIPTION

Various embodiments of the method of the present disclosure are described below.

According to an embodiment of the method of the present disclosure, a wireless identification signal (320) is emitted, wherein the signal comprises a digital identification of a floating element (10). The signal is emitted by wireless communication means (13) from a floating element (10). The floating element (10) is suitable for floating in a coastal region, whether marine or riverine, and may be afloat in the sea, in a river or in a lake. The emission of a wireless identification signal (320) as described enables ships or boats sailing in the vicinity of the floating element (10) to receive that signal and identify that a floating element (10), and in particular the floating element (10) with said digital identification, is in the vicinity.

According to an embodiment of the method of the present disclosure, which may occur subsequently or prior to said emission of a wireless identification signal (320), a wireless acknowledgement signal (310) is received on the communication means, the wireless acknowledgement signal (310) comprising a digital identification of a floating vessel (100), such as a ship or a boat. In an embodiment wherein a wireless identification signal (320) is emitted, upon receiving the wireless identification signal (320), a floating vessel (100) may respond by sending a wireless acknowledgement signal (310). In an embodiment, the wireless acknowledgement signal (310) may comprise a control command and/or a wireless digital identification of the vessel. Alternatively, it may simply comprise a confirmation of receipt message, a.k.a. acknowledgement.

Based on said wireless acknowledgement signal (310), the method involves determining, according to the received wireless acknowledgement signal (310), a proximity value to the floating element (10), the proximity value being associated with the wireless acknowledgement signal (310). The communication means may thus, based on the wireless acknowledgement signal (310) - optionally on a parameter of the wireless response signal - determine a proximity value.

Based on the proximity value, the emission power of the wireless communication means (13) is adjusted, thus ensuring that: (i) if the proximity value is translated into a distance considered high (or above a predefined value), the power can be increased, to ensure that any emitted signal is received on the floating vessel (100) and that the power is not unreasonably increased and (ii) if the proximity value is translated into a distance considered low (or below a predefined value), the power can be reduced, to ensure that no more power than necessary is consumed.

This makes it possible that by matching the emission power to the distance at which a wireless acknowledgement signal emitting element (310), a communication device, such as a communication module, associated with the floating element (10) i) better manages the power consumption associated with typically energy-intensive wireless communications so that no higher or substantially higher power is used than necessary - which is associated with higher power consumption - and (ii) in case of reception of a wireless acknowledgement signal (310) for which a proximity value translated into a distance that is considered low is determined, the emission power can be adjusted such that it ensures good reception of any wireless signal to be emitted from the floating element (10) at a distance associated with the determined proximity value.

In an embodiment, determining a proximity value of the floating element (10) to a floating vessel (100), from which a wireless acknowledgement signal (310) originates, comprises determining a physical distance between the floating element (10) and a source of the response wireless signal. Said physical distances may, as noted above, be determined by any method known in the prior art for determining proximity or distance of a device from a received wireless signal.

The proximity value may be determined by any method known in the prior art for determining proximity or distance of a device from a received wireless signal such as, for example, based on the received signal strength indicator (RSSI) associated with the received wireless acknowledgement signal (310).

It is possible for several floating vessels to be in proximity to the communication means associated to a floating element (10).

Therefore, in one embodiment, the method comprises, upon reception of two or more wireless acknowledgement signals, each of the wireless acknowledgment signals comprising a distinct digital identifier, determining, based on each of the received wireless acknowledgement signals, a proximity value to the floating element (10), each of the proximity values being associated with the respective wireless acknowledgement signal (310), and based on each of the proximity values, adjusting the emission power of the wireless communication means (13) and transmitting a wireless signal directed to each of the two or more distinct digital identifiers with the corresponding adjusted power.

In an embodiment, the present disclosure comprises, prior to receiving the wireless acknowledgement signal (310) from the floating element (10) and via the wireless communication means (13), emitting a wireless identification signal (320), the wireless identification signal (320) comprising a digital identification of the floating element (10).

It is possible that simultaneously or quasi-simultaneously, several floating vessels emit their respective wireless acknowledgement signals. When a wireless identification signal (320) is emitted, it is also possible that several floating vessels receive the same wireless identification signal (320) and, as a consequence, emit the respective wireless acknowledgement signals.

In such a case, the communication means of the floating element (10) will receive two or more wireless acknowledgement signals, each with a respective distinct digital identifier corresponding to each of the floating vessels.

The communication means of the floating element (10) will thus transmit two or more wireless signals, at least one to each of the two or more floating vessels with respective distinct digital identifiers, wherein each of these wireless signals is emitted with a given power corresponding to the proximity value determined on the basis of the corresponding wireless acknowledgement signal (310), thereby ensuring that the advantages of the object of the present disclosure are maintained even in a situation of several floating vessels simultaneously.

In an embodiment, subsequent to adjusting the emission power, the method additionally comprises the step of:
in the floating element (10), emitting a wireless location signal with the adjusted power, the wireless location signal comprising digital information about the geographical location of the floating element (10).

This will enable the floating vessel (100) receiving the location wireless signal to determine its location, even if it is unable to determine its location by any other means. Alternatively or cumulatively, it will also enable it to confirm its location, even if it has the ability to determine its location by another means. This is accomplished while maintaining the power management precepts of the present disclosure, by keeping the emission with the adjusted power.

In another embodiment, subsequent to the emission power adjustment, the method additionally comprises the step of:
at the floating element (10), emitting a detailed identification wireless signal (320) with the adjusted power, the detailed identification wireless signal (320) comprising a set of digital information including registration data of the floating element (10), including the name of the owner of the floating element (10) and/or the type of the floating element (10).

This will enable the floating vessel (100) receiving the detailed wireless identification signal (320) to determine specific information of the floating element (10), such as its owner, which may be particularly useful for floating vessels such as maritime authority boats. Cumulatively, the method may involve confirming in a local or remote digital database the owner of the floating element (10). Alternatively or cumulatively, it enables the identification of the type of the floating element (10), and may indicate that it is a marker buoy or a small vessel, such as a dinghy. This is accomplished while maintaining the power management precepts of the present disclosure, by keeping the emission with the adjusted power.

In an embodiment, the wireless signal emitted by the communication means is susceptible of being emitted with a power such that it provides a maximum range of 50 to 200 m, optionally 100 to 200 m.

In an embodiment, the wireless identification signal (320) is broadcast. This enables, even if a connection has not yet been established between the communication means and any other receiving communication device, any receiving communication device in the same frequency range to detect and receive the wireless identification signal (320).

In an embodiment, the wireless acknowledgement signal (310) is directed to the floating element (10) comprising the digital identification of the respective floating vessel (100).

In an embodiment, the wireless acknowledgement signal (310) is broadcast.

In an embodiment, the emission power of the wireless communication means of the floating element (13) is adjusted directly to the determined proximity value. This makes it possible to adapt the power, and thus the consumed energy, to the proximity at which a receiving element such as a floating vessel (100) may be, by increasing the power when the proximity value is translated into a distance considered to be high and lowering the power when the proximity value is low.

In an embodiment of the method of the present disclosure, the wireless communication means (12, 13) may be according to any wireless communication protocol suitable for said communication.

Possible examples are local area network wireless communication protocols at a frequency in the Industrial, Scientific and Medical (ISM) radio frequency band.

In an embodiment of the method of the present disclosure, the wireless communication means (12, 13) are configured to communicate on a frequency in the range between 433.05 MHz and 434.79 MHz, in the range between 902 MHz and 928 MHz, or in the range between 2.4 GHz and 2.5 GHz.

In an embodiment of the method of the present disclosure, the floating element (10) comprises a marker buoy arranged in a coastal area. Additionally, the wireless response signal is emitted by a floating vessel (100) which optionally consists of a boat or ship in navigation in the same coastal area.

In an alternative embodiment of the method of the present disclosure, the floating element (10) comprises a small vessel arranged in a coastal area. Additionally, the wireless response signal is emitted by a floating vessel (100) optionally consisting of a boat or ship in navigation in the same coastal area.

In an embodiment, the identification wireless signal (320) comprises a unique digital identifier of the wireless communication means (13) and/or the floating element (10). This enables unambiguous identification of the floating element (10).

In an embodiment, the method may comprise, upon reception of a wireless acknowledgement signal (310), actuating light means associated with the floating element (10).

In an embodiment, the actuation of light means is performed after determining a proximity value to the floating element (10) and the actuation of light means comprises, based on the proximity value, adjusting the light intensity emitted by the light means.

As aforementioned, a wireless communication module for managing energy consumption in communications from a floating element (10) to a coastal area is also an object of the present disclosure.

In an embodiment, the module additionally comprises light means. In an embodiment, the module controller is configured for, on receipt of a wireless acknowledgement signal (310), actuating the light means associated with the floating element (10). In an embodiment, the module is additionally configured for the actuation of light means being performed after determining a proximity value to the floating element (10) and for the actuation of light means comprising, based on the proximity value, adjusting the light intensity emitted by the light means.

It is further an object of the present disclosure to use the wireless communication module of the present disclosure in any of its embodiments, the module being coupled to a floating element (10) adapted to float in a coastal area.

Various embodiments of the floating element (10) of the present disclosure are described below.

In an embodiment, the floating element (10) comprises a small vessel arranged in a coastal area, and the wireless response signal is emitted by a floating vessel (100). In an embodiment, the floating vessel (100) consists of a boat or ship in navigation in the same coastal area.

In an embodiment, the floating element (10) consists of a marker buoy.

In an alternative embodiment, the floating element (10) consists of a small boat.

In an embodiment, the small boat has an overall length of 6 m or less, optionally consisting of a dinghy.

In an embodiment, the floating vessel (100) consists of a boat or a ship.

The floating element (10) and/or a floating vessel (100) may comprise wireless communication means configured to emit wireless signals. In an embodiment, each of the wireless communication means comprises a wireless communication controller.

In various embodiments, the method, the module, the floating element and/or elements thereof include components for performing at least some of the example features and capabilities of the described methods, whether by means of hardware components (such as memory and/or processor), software, or any combination thereof.

In various embodiments, the device controller or the communication controllers may consist of or comprise a microcontroller, with the ability to receive external data via inputs and provide triggering of outputs, based on configured rules and/or predefined programming.

An article for use with the method, the module and/or the floating element, such as a pre-recorded storage device or other similar computer-readable medium including program instructions recorded thereon, or a computer data signal carrying computer-readable program instructions may direct a device to facilitate implementation of the methods described herein. It is understood that such apparatus, articles of manufacture and computer data signals are also within the scope of the present disclosure.

A "computer-readable medium" is understood as any medium that can store instructions for use or execution by a computer or other computing device, including read-only memory (ROM), erasable programmable read-only memory (EPROM) or flash memory, random access memory (RAM), a portable floppy disk, a hard disk drive (HDD), a solid state storage device (e.g., NAND flash or synchronous dynamic RAM (SDRAM)), and/or an optical disc, such as a Compact Disc (CD), Digital Versatile Disc (DVD), or Blu-Ray ^{™} Disc.

As will be evident to a person skilled in the art, the present invention should not be limited to the embodiments described herein, with a number of changes being possible, which remain within the scope of this invention.

Of course, the preferred embodiments above described are combinable in the different possible forms, the repetition of all such combinations being herein avoided.

## Claims

1. A method for managing energy consumption in communications from a floating element (10) suitable for a coastal area, **characterized in that** it comprises the steps of:
on a floating element (10) and through wireless communication means (13), receiving a wireless acknowledgement signal (310), the wireless acknowledgement signal (310) comprising a digital identification of a floating vessel (100),
based on the received wireless acknowledgement signal (310), determining a proximity value to the floating element (10), the proximity value being associated with the wireless acknowledgement signal (310), and
based on the proximity value, adjusting the emission power of the wireless communication means (13).

2. A method according to the preceding claim comprising, prior to or subsequent to receiving the wireless acknowledgement signal (310), the floating element (10) and via the wireless communication means (13), emitting a wireless identification signal (320), the wireless identification signal (320) comprising a digital identification of the floating element (10).

3. A method according to any one of the preceding claims wherein, subsequent to adjusting the emission power, the method additionally comprises the step of:
on the floating element (10), emitting a wireless location signal with the adjusted power, the wireless location signal comprising digital information about the geographical location of the floating element (10).

4. A method according to the preceding claim wherein, subsequent to adjusting the emission power, the method additionally comprises the step of:
on the floating element (10), emitting a detailed identification wireless signal (320) with the adjusted power, the detailed identification wireless signal (320) comprising a set of digital information including registration data of the floating element (10) including the name of the owner of the floating element (10) and/or the type of the floating element (10).

5. A method according to any one of the preceding claims, wherein the wireless signal emitted by the communication means is susceptible of being emitted with a power such that it provides a maximum range of 50 to 200 m, optionally 100 to 200 m.

6. A method according to any one of the preceding claims, wherein the wireless identification signal (320) is broadcast and/or the wireless acknowledgement signal (310) is directed to the floating element (10), comprising its digital identification and/or the wireless acknowledgement signal (310) is broadcast.

7. A method according to any one of the preceding claims wherein it comprises, upon reception of two or more wireless acknowledgement signals, each of the wireless acknowledgement signals comprising a distinct digital identifier, determining, based on each of the received wireless acknowledgement signals, a proximity value to the floating element (10), each of the proximity values being associated with the respective acknowledgement wireless signal (310), and based on each of the proximity values, adjusting the emission power of the wireless communication means (13) and transmitting a wireless signal directed to each of the two or more distinct digital identifiers with the corresponding adjusted power.

8. A method according to any one of the preceding claims, wherein it comprises, upon reception of a wireless acknowledgement signal (310), actuating light means associated with the floating element (10) and, optionally, the actuation of the light means taking place after determining a proximity value to the floating element (10) and the actuation of the light means comprising, based on the proximity value, adjusting the light intensity emitted by the light means.

9. A method according to any one of the preceding claims, wherein the floating element (10) comprises a marker buoy arranged in a coastal area, and each wireless acknowledgement signal (310) is emitted by a floating vessel (100) which optionally comprises a boat or ship navigating in the same coastal area.

10. A method according to any one of claims 1-8, wherein the floating element (10) comprises a small boat arranged in a coastal area, and each wireless acknowledgement signal (310) is emitted by a floating vessel (100) which optionally comprises a boat or ship in navigation in the same coastal area.

11. A wireless communication module for managing energy consumption in communications from a floating element (10) to a coastal area, **characterized in that** it comprises coupling means configured for coupling to a floating element (10) and comprising wireless communication means (13) and a controller in connection with the wireless communication module, the wireless communication means (13) being configured to implement the method of any one of claims 1-10.

12. Use of the wireless communication module of claim 11, wherein the module is coupled to a floating element (10) adapted to float in a coastal area, the floating element (10) optionally consisting of a marker buoy or a small boat.

13. A floating element (10) adapted to float in a coastal area, **characterised in that**
It comprises a controller, wireless communication means and electrical power supply means, the electrical power supply means and the wireless communication means being connected such that the electrical power supply means feed the wireless communication means, and the floating element (10) being configured to implement the method of any one of claims 1-10, or
It comprises the wireless communication module of claim 11 and electrical power supply means, the electrical power supply means and the wireless communication module being connected such that the electrical power supply means feeds the wireless communication module.

14. A floating element (10) according to the preceding claim, wherein it consists of a marker buoy.

15. A floating element (10) according to claim 13, wherein it consists of a small boat, optionally having a length of 6 m or less, optionally a dinghy.
